# EUROPÄISCHE PATENTANMELDUNG

(11) **EP 4 582 570 A1**
(43) Veröffentlichungstag der Anmeldung: **09.07.2025**
(21) Anmeldenummer: 24196049.1
(22) Anmeldetag: 23.08.2024
(51) Int. Cl.: C22B 3/16, C22B 3/44, C22B 26/12, H01M 10/54, H01M 6/52

(54) **AUFBEREITUNG VON BLACKMASS**

(30) Priorität: 10.11.2023 DE 102023211159
(71) Anmelder: PowerCo SE, 38239 Salzgitter (DE)
(72) Erfinder: Gallenkemper, Martin, 38120 Braunschweig (DE); Reitzle, Alexander, 89231 Neu-Ulm (DE); Klimek, Klaus Stefan, 37120 Bovenden (DE)
(74) Vertreter: MFG Patentanwälte Meyer-Wildhagen Meggle-Freund Gerhard PartG mbB

(57) **Zusammenfassung**

Beschrieben wird hierin ein Verfahren zur Aufreinigung von Blackmass einer Batterie umfassend die Schritte Bereitstellen von aufbereiteter Kathoden- oder Anoden-Blackmass, in Kontakt bringen von aufbereiteter Blackmass mit einer basischen Mischung, wobei die basische Mischung mindestens einen Alkohol und mindestens ein Alkoholat umfasst. Ferner wird die Verwendung einer basischen Mischung zur Aufreinigung von Blackmass offenbart.

## Beschreibung

Die Erfindung betrifft ein Verfahren zur Aufreinigung von Blackmass und die Verwendung einer basischen Mischung zur Aufreinigung von Blackmass.

Im Zuge einer nachhaltigen Verwendung von Rohstoffen, gewinnt das Recycling einen immer größer werdenden Stellenwert. Gewöhnliche (Thermo-)mechanische Recyclingprozesse führen häufig zu einer zu hohen Verunreinigung. Beispielsweise gibt es bei dem direkten Recyceln von NMC (Nickel-Mangan-Cobalt-Mischoxid)-Kathoden-Produktausschüssen bei der Batteriezellproduktion zu viel Aluminium. Durch die Kombination verschiedener Prozesse (thermisch, nass- und trocken mechanisch) wird in der Regel eine nicht hinreichende Qualität (Reinheit des Wertstoffes, zu hohe Aluminiumgehalte) erreicht.

Im EoL-Recycling (End-of-Life) von Batterien gibt es Verfahren der Solventextraktion, die einzelne Metalle als Wertstoff herausziehen.

US9825341 B2 offenbart den Einsatz von Lösemittel zur Aufbereitung von Batteriematerial.

WO2022/133585A1 offenbart ein Verfahren zur Rückgewinnung von Metallen aus Blackmass unter Verwendung von Ameisensäure und Wasserstoffperoxid.

EP3806229 A1 offenbart ein Verfahren zum Recycling von Lithiumionen-Batterien unter Verwendung von polaren Lösungsmitteln.

CN115347266A offenbart ein Recycling-Verfahren für Lithiumionen-Batterien mittels Nassvermahlung.

Aufgabe der vorliegenden Erfindung ist es, ein Verfahren zur Aufreinigung von Blackmass sowie die Verwendung einer basischen Mischung zur Aufreinigung von Blackmass bereitzustellen, das bzw. die die oben genannten Nachteile wenigstens teilweise überwindet.

Diese Aufgabe wird durch das erfindungsgemäße Verfahren nach Anspruch 1 und die Verwendung nach Anspruch 8 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Verfahren zur Aufreinigung von Blackmass einer Batterie umfasst die Schritte:
- Bereitstellen von aufbereiteter Blackmass,
- in Kontakt bringen von aufbereiteter Blackmass mit einer basischen Mischung, wobei die basische Mischung mindestens einen Alkohol und mindestens ein Alkoholat umfasst.

Blackmass einer Batterie ist eine elektrochemisch wirksame Schicht, die verschiedenste Metalle, wie Lithium, Mangan, Kupfer, Nickel, Cobalt etc. aufweist. Bei einer Kathode handelt es sich bei der Blackmass um Aluminiumfolie, auf die eine Schicht aus NMC (Nickel-Mangan-Cobalt-Mischoxid), Binder, Leitadditiven, etc. aufgetragen wird. Das NMC kann durch andere Aktivmaterialien, wie z.B. Eisenphosphat, Nickel-Kobalt-Aluminium-Oxid oder Schwefelverbindungen ersetzt werden. Als zusätzliches Kation kann Lithium verwendet werden. Bei einer Anode handelt es sich bei der Blackmass weitgehend um Graphite mit Bindern und Leitadditiven. Blackmass kann zudem Silizium, Graphen und/oder Lithium-Titan-Dioxid umfassen. Generell werden die meisten Aktivmaterialen mit zusätzlich Metallen gedopt.

Vorliegend kann es sich um Blackmass einer Kathode, oder um Blackmass einer Anode handeln. In einer alternativen Ausführungsform kann es sich auch um eine Mischung aus Blackmass einer Kathode und Blackmass einer Anode handeln.

Die Blackmass kann aus einem Scrap-Strom, d.h. einem Wertstoffstrom, stammen und eine gezielte Behandlung dieser Ströme durchgeführt werden. Für jede Aufbereitung kann es Vorteile bringen, wenn die Stoffströme vorab abgetrennt werden. Beispielsweise kann es Vorteile für die Anode bringen, da gezielt auf die Folien der Anode, z. B. Kupferfolie, adaptiert werden kann und deren Rückstände durch (thermo-)mechanische Behandlung gezielt vermieden und entfernt werden können und so eine erheblich verunreinigungsärmere Blackmass erzeugt werden kann. So kann auch auf der Anodenseite aufgrund des relativ inerten Aktivmaterials und die Verwendbarkeit von wässrigen Systemen ein selektives Entfernen von Verunreinigungen z. B. Kupfer möglich sein und eine Abtrennung von Aluminium kann aufgrund der Sortenreinheit gar nicht notwendig sein.

Ein erfindungsgemäßes Verfahren umfasst den Schritt des Bereitstellens von aufbereiteter Blackmass, vorzugsweise von Blackmass hoher Reinheit z.B. durch die Verwendung von sortenreinen Inputströmen (beispielsweise können Stoffströme aus Produktionsausschüssen oder aus einer Vorsortierung verwendet werden). Unter einer hohen Reinheit versteht man beispielsweise eine Verunreinigung der Blackmass von höchstens 2000 ppm, vorzugsweise von höchstens 500 ppm, weiter bevorzugt von höchstens 20 ppm. Bei dem Aufbereiten kann es sich um verschiedene mechanische und/oder chemische Verfahren handeln. In einer Ausführungsform kann es sich bei der Aufbereitung um ein mechanisches Zerkleinern von Produktionsausschüssen/Scrap zu Blackmass handeln. Das mechanische Zerkleinern kann Shreddern, Schneiden, Mahlen, elektrohydraulische Fragmentation, De-Agglomerieren oder andere Zerkleinerungsprozesse umfassen.

Bei der chemischen Aufbereitung kann es sich um die Behandlung mit geeigneten Chemikalien, wie organischen oder anorganischen Säuren oder Basen handeln.

Es ist auch denkbar, dass zusätzlich, oder alternativ zur mechanischen oder chemischen Aufbereitung eine thermische Aufbereitung stattfindet.

Die mechanisch und/oder chemisch und/oder thermisch behandelte Blackmass kann auch in Fraktionen verschiedener Partikelgrößen aufgeteilt werden. Zusätzlich oder alternativ können auch einzelne Partikel abgetrennt werden.

Vorzugsweise wird die Blackmass zu einem pulverförmigen Material bearbeitet. Beispielsweise kann es sich bei der aufbereiteten Blackmass um ein sortenreines pulverförmiges Kathodenmaterial handeln.

In einem weiteren Schritt des Verfahrens wird die aufbereitete Blackmass mit einer basischen Mischung in Kontakt gebracht werden, wobei die basische Mischung mindestens einen Alkohol und mindestens ein Alkoholat umfasst.

In einer Ausführungsform handelt es sich bei dem mindestes einen Alkohol um einen Alkohol ausgewählt aus einem Ca-Cs-Alkohol. Vorzugsweise handelt es sich bei dem mindestens einen Alkohol um einen Alkohol ausgewählt aus einem C₃-C₆-Alkohol. Der mindestens eine Alkohol kann ausgewählt sein aus der Gruppe bestehend aus Propanol, Isopropanol, n-Butanol, Pentanol- und Hexanolisomeren.

Bei dem mindestens einen Alkohol handelt es sich vorzugsweise um n-Butanol.

Bei dem mindestens einen Alkohol kann es sich auch um eine Mischung aus mindestens zwei Alkoholen handeln. Es kann sich bei dem mindestens einen Alkohol auch um eine Mischung aus mindestens einem Alkohol (z. B. C₃-C₈-Alkohol) und Wasser handeln.

Ferner umfasst die basische Mischung mindestens ein Alkoholat. In einer Ausführungsform handelt es sich bei dem Alkoholat um ein Alkali-Alkoholat oder ein Übergangsmetall-Alkoholat. Es kann sich bei dem Alkoholat auch um ein Erdalkali-Alkoholat handeln.

Ein Alkali-Alkoholat kann ausgewählt sein aus der Gruppe bestehend aus Li-Alkoholat, Na-Alkoholat und Kalium-Alkoholat. In einer bevorzugten Ausführungsform handelt es sich bei dem Alkali-Alkoholat um Li-Alkoholat.

Ein Übergangsmetall-Alkoholat kann ausgewählt sein aus der Gruppe bestehend aus Fe-Alkoholat, Ni-Alkoholat und Cr-Alkoholat.

Bei dem mindestens einen Alkali-Alkoholat oder Übergangsmetall-Alkoholat kann es sich auch um eine Mischung von mindestens zwei Alkoholaten handeln.

Vorzugsweise ist das Alkoholat abgestimmt auf den verwendeten mindestens einen Alkohol. Beispielsweise kann es sich bei dem Alkohol um Butanol handeln und bei dem Alkoholat um ein Butanolat.

Vorzugsweise kann die basische Mischung Isopropanol und Li-Isopropanolat umfassen. Alternativ kann die basische Mischung tert-Butanol und Li-tert.-Butanolat umfassen.

Der mindestens eine Alkohol und das mindestens eine Alkoholat können in einem bestimmten Verhältnis vorliegen. Der mindestens eine Alkohol und das mindestens eine Alkoholat können im Verhältnis im Bereich von 99:1 bis 8:2, bevorzugt im Bereich von 99:1 bis 9:1, noch weiter bevorzugt im Bereich von 98:2 bis 95:5 sein.

In einer Ausführungsform weist die basische Mischung einen pH-Wert im Bereich von größer 7,5 auf. In einer bevorzugten Ausführungsform weist die basische Mischung einen pH-Wert im Bereich von 8 bis 14, in einer weiteren bevorzugten Ausführungsform weist die basische Mischung einen pH-Wert im Bereich von 9 bis 12 auf.

Die basische Mischung kann ferner weitere Bestandteile aufweisen. Die basische Mischung kann Komplexbildner oder andere Hilfsstoffe aufweisen. Beispielsweise kann die basische Mischung Komplexbildner für verschiedene Metalle, z.B. Aluminium-Komplexbildner aufweisen.

Durch das Inkontaktbringen der aufbereiteten Blackmass und der basischen Mischung können Bestandteile der Blackmass, wie Aluminium und/oder oxidiertes Aluminium selektiv abgetrennt werden. Aluminium kann mit der basischen Mischung ein amphotheres Aluminium bilden und so aus der aufbereiteten Blackmass abgetrennt werden. Durch das Bilden von amphotherem Aluminium können selbst geringe Mengen von Aluminium abgetrennt werden und so die aufbereitete Blackmass aufgereinigt werden. Besonders bevorzugt werden durch die basische Mischung keine weiteren Komponenten der Blackmass angegriffen bzw. zerstört, beispielsweise wird die Partikelstruktur von Komponenten wie NMC (Nickel-Mangan-Cobalt-Mischoxid) nicht angegriffen.

Abgetrennte Komponenten, wie z. B. Aluminium, können einer weiteren Aufbereitung bzw. einem Recycling zugeführt werden und so wieder einem Stoffkreislauf zugeführt werden.

Bei der Blackmass kann es sich um trockene Blackmass handeln. Trockene Blackmass aus dem Batterierecycling umfasst keine flüssigen Bestandteile, wie Elektrolyte oder flüssiger Batterieslurry. Vielmehr kann es sich bei trockener Blackmass um beschichtete Coils, verknittertes Material von Störungen, einzelne Sheets oder gestapeltes Material, welches wieder auseinander sortiert wird (Trennung Kathode, Anode, Separator, Hilfsmittel) und gegebenenfalls zuvor aus einem Gehäuse (fest oder Pouch) herausgeholt wird, handeln. Trockene Blackmass kann insbesondere aus Produktionsausschuss stammen.

Alternativ kann es sich auch um feuchte Blackmass handeln. Feuchte Blackmass aus dem Batterierecycling umfasst flüssige Bestandteile, wie beispielsweise Elektrolyte oder flüssigen Batterieslurry. Feuchte Blackmass kann aus defekten Batterien, Batteriematerial aus dem Misch- und Coating-Verfahren, oder Batterien deren Lebensende erreicht ist, stammen.

Wird feuchte Blackmass verwendet, kann diese zusammen mit der basischen Mischung nassvermahlen werden und so weiter im Verfahren eingesetzt werden.

Das Verfahren kann ferner den Schritt der mechanischen Trennung von Blackmass und basischer Mischung umfassen. Bei der mechanischen Trennung kann es sich um eine Filtration, Siebung, Sedimentation, Zentrifugierung oder andere mechanische Trennprozesse handeln. Die Trennung kann beispielsweise mittels Sieb, Dekanter, Filter, etc. erfolgen.

Die abgetrennte Blackmass kann weiter aufgereinigt werden. Die weitere Aufreinigung kann durch Waschen bzw. mehrfaches Waschen mit geeigneten Lösungsmitteln oder sogar mit der basischen Mischung durchgeführt werden. Die gewaschene Blackmass kann anschließend vom Lösungsmittel bzw. der basischen Mischung befreit werden. Dies kann durch Trocknen bei erhöhten Temperaturen, durch Anströmen mit trockener Luft, oder Inertgas, oder durch Waschen mit Lösungsmitteln, die für die weitere Bearbeitung der Blackmass von Vorteil sind (z. B. NMP), erfolgen. Hierbei kann eine Lösemittelrückgewinnung eingebunden werden.

Ferner ist Gegenstand der vorliegenden Erfindung die Verwendung einer basischen Mischung umfassend mindestens einen Alkohol und mindestens ein Alkoholat zur Aufreinigung von Blackmass. Bei der Blackmass kann es sich um trockene Blackmass, wie hierin beschrieben, handeln. Alternativ kann es sich um feuchte Blackmass, wie hierin beschrieben, handeln.

Bei der basischen Mischung, dem mindestens einen Alkohol und dem mindestens einen Alkoholat kann es sich um die basische Mischung, den Alkohol, bzw. das Alkoholat, wie hierin beschrieben, handeln. Vorzugsweise umfasst die basische Mischung mindestens ein Li-Alkoholat. Bei dem Li-Alkoholat kann es sich um ein Li-Alkoholat, wie hierin beschrieben, handeln.

Ausführungsbeispiele der Erfindung werden nun beispielhaft und unter Bezugnahme auf die beigefügten Zeichnungen beschrieben, in der:
Fig. 1 schematisch ein erfindungsgemäßes Verfahren,
Fig. 2 schematisch ein erfindungsgemäßes Verfahren, und
Fig. 3 schematisch ein erfindungsgemäßes Verfahren,
zeigen.

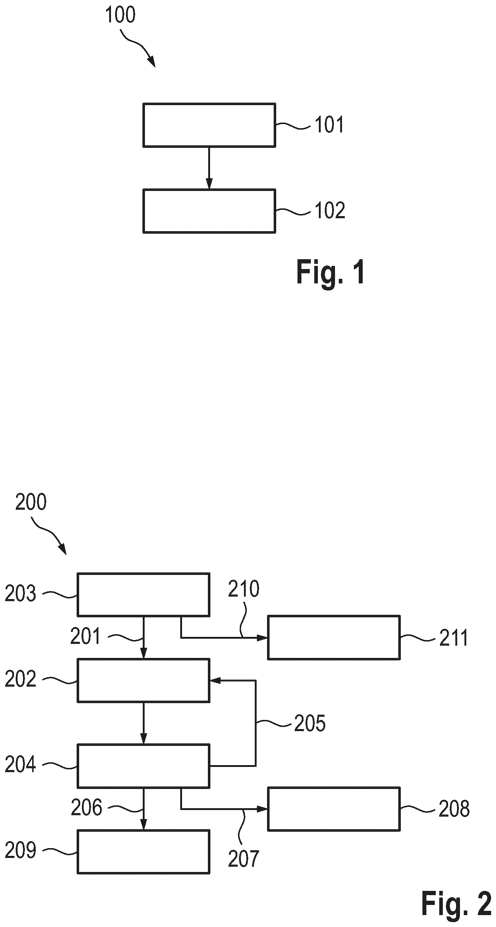

Ein Ausführungsbeispiel eines erfindungsgemäßen Verfahrens 100 ist in Fig. 1 gezeigt. Das Verfahren zur Aufreinigung von Blackmass einer Batterie 100 umfasst die Schritte 101, bei dem aufbereitete Blackmass zur Verfügung gestellt werden. Anschließend wird die aufbereitete Blackmass mit einer basischen Mischung in Kontakt gebracht 102, wobei die basische Mischung mindestens einen Alkohol und mindestens ein Alkoholat umfasst.

Fig. 2 zeigt eine weitere Ausführungsform eines Verfahrens zur Aufreinigung von Blackmass einer Batterie 200. Zunächst kann eine konventionelle Blackmassgewinnung 203 stattfinden. Bei der konventionellen Blackmassgewinnung 203 kann es sich um eine trockene mechanische Delamination handeln. Gegebenenfalls kann bei einer konventionellen Blackmassgewinnung 203 auch eine thermische Aufbereitung und/oder eine trockene Trennung stattfinden. Durch die konventionelle Blackmassgewinnung 203 kann aufbereitete Blackmass 201 und Reste 210, wie Alufolie, gewonnen werden. Reste 210, wie Alufolie können einem Alu-Recycling 211 zugeführt werden. Die aufbereitete Blackmass 201 können anschließend mit einer basischen Mischung in Kontakt gebracht werden 202 und so einen Slurry bilden. Die basische Mischung umfasst dabei mindestens einen Alkohol und mindestens ein Alkoholat (z. B. Li-Alkoholat). Dadurch kann das Aluminium, das noch in der Blackmass vorhanden ist, selektiv aufgelöst werden. Im Anschluss kann es zu einer mechanischen Auftrennung 204 durch Entfernung des verunreinigten Lösemittels, beispielsweise durch Filtern, Dekantern, etc., kommen. Der abgetrennte Feststoff kann durch Waschen 205 gereinigt werden und erneut mit der basischen Mischung in Kontakt gebracht werden 202. Bei dem aus der Auftrennung 204 gewonnen Feststoff 206 handelt es sich um aufbereitete Blackmass. Bei der aus der Auftrennung 204 gewonnenen Flüssigkeit 207 handelt es sich um den mindestens einen Alkohol, das mindestens eine Alkoholat und das mindestens eine Aluminiumion oder der mindestens eine Aluminiumkomplex. Der mindestens eine Alkohol, das mindestens eine Alkoholat und das Aluminiumion bzw. der Aluminiumkomplex können einer Regeneration 208 zugeführt werden. Dabei können der mindestens eine Alkohol, das mindestens eine Alkoholat und/oder das Aluminiumion bzw. der Aluminiumkomplex wiederaufbereitet werden und wiederverwendet werden. Anschließend kann Restfeuchte entfernt werden 209 und so beispielsweise Lösungsmittel, das nicht wiederverwendet werden kann, entfernt werden. Das Entfernen der Restfeuchte 209 kann durch Trocknen und/oder Waschen mit geeignetem Lösungsmittel (z. B. NMP) erfolgen.

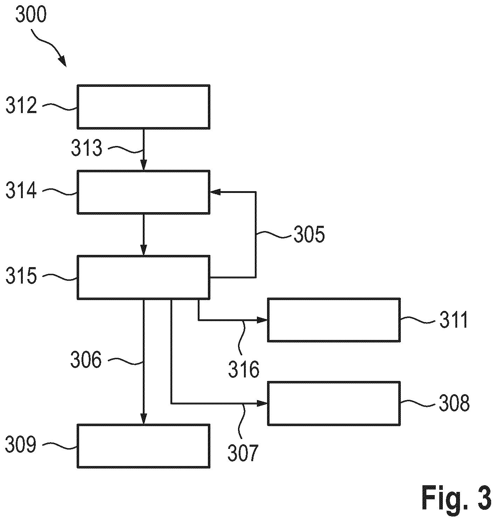

Fig. 3 zeigt eine weitere Ausführungsform eines Verfahrens zur Aufreinigung von Blackmass einer Batterie 300. Zunächst kann eine konventionelle Vorzerkleinerung von Batteriematerial 312 erfolgen. Die konventionelle Vorzerkleinerung kann durch einen Schredder oder eine Schneidmühle erfolgen. Das zerkleinerte Material 313 kann anschließend einer Nassmahlung 314 zugeführt werden. Dabei wird das zerkleinerte Material 313 mit mindestens einem Alkohol und mindestens einem Alkoholat (z. B. Li-Alkoholat) nassvermahlen. Dabei kommt es zu einer parallelen Delamination und Auflösung des vorhandenen Aluminiums. In einem weiteren Schritt kann eine mehrstufige mechanische Trennung 315 von Flüssigkeit, Folie, Blackmass und gegebenenfalls vorhandenen Mahlkörpern erfolgen. Das mechanisch getrennte Material kann gegebenenfalls gewaschen werden 305 und erneut der Nassmahlung 314 zugeführt werden.

Durch die mechanische Auftrennung 315 können so Feststoff 306, d.h. aufbereitete Blackmass, Flüssigkeit 307, wie der mindestens eine Alkohol, das mindestens eine Aluminium-Alkoholat oder ein Aluminiumkomplex und Alufolie 316 gewonnen werden. Die Alufolie kann dem Alu-Recycling 311 zugeführt werden. Der mindestens eine Alkohol, das mindestens eine Alkoholat und das Aluminium können einer Regeneration 308 zugeführt werden. Dabei können der mindestens eine Alkohol, das mindestens eine Alkoholat und/oder das Aluminium wiederaufbereitet werden und wiederverwendet werden. Anschließend kann Restfeuchte entfernt werden 309 und so beispielsweise Lösungsmittel, das nicht wiederverwendet werden kann, entfernt werden. Das Entfernen der Restfeuchte 309 kann durch Trocknen und/oder Waschen mit geeignetem Lösungsmittel (z. B. NMP) erfolgen.

Beispiel: Aufbereitung von Kathoden-Blackmass nach einem einfachen mechanischen Prozess zur Blackmass-Gewinnung
1. Schreddern der Kathodenfolie
2. Ggfs. Pyrolyse bei 500 °C mit 1 h Verweilzeit
3. Hammermühle (Siebweite 5 mm)
4. Siebung mit Vibrationssieb (125 µm)
5. Zugabe der Feinfraktion (ca. 100 g) in einen Rührbehälter mit 1000 g Isopropanol und 50 g Li-2-Propanolat im Alkohol gelöst.
6. 45 Minuten Mischen, um Aluminium-Verunreinigungen aufzulösen
7. Filtern (5 µm)
8. Feststoff: Zugabe in Rührbehälter mit 1000 g Isopropanol und 10 g Li-2-Propanolat im Alkohol gelöst.
9. Filtern 5 µm
10. Feststoff im Trockenschrank bei 85°C trocknen
11. Kontrolle der Verunreinigung mit IPC

### Bezugszeichenliste

- 100, 200, 300: Verfahren zur Aufreinigung von Blackmass
- 101, 201: Bereitstellen von aufbereiteter Blackmass
- 102, 202: in Kontakt bringen von aufbereiteter Blackmass mit einer basischen Mischung
- 203: konventionelle Blackmassgewinnung
- 204: mechanische Auftrennung
- 205, 305: Waschen
- 206, 306: Feststoff
- 207, 307: Flüssigkeit
- 208,308: Regeneration
- 209, 309: Entfernen von Restfeuchte
- 210: Reste
- 211, 311: Alu-Recycling
- 312: Vorzerkleinerung von Batteriematerial
- 313: zerkleinertes Material
- 314: Nassmahlung
- 315: mechanische Trennung
- 316: Alufolie

## Patentansprüche

1. Verfahren zur Aufreinigung von Blackmass einer Batterie umfassend die Schritte:
- Bereitstellen von aufbereiteter Kathoden- oder Anoden-Blackmass,
- in Kontakt bringen von aufbereiteter Blackmass mit einer basischen Mischung, wobei die basische Mischung mindestens einen Alkohol und mindestens ein Alkoholat umfasst.

2. Verfahren nach Anspruch 1, wobei der mindestens eine Alkohol ein C₃-C₈-Alkohol ist.

3. Verfahren nach Anspruch 1 oder Anspruch 2, wobei das mindestens eine Alkoholat ein Alkali-Alkoholat oder ein Übergangsmetall-Alkoholat sein.

4. Verfahren nach mindestens einem der Ansprüche 1 bis 3, wobei das mindestens eine Alkoholat ein Li-Alkoholat ist.

5. Verfahren nach mindestens einem der Ansprüche 1 bis 4, wobei die basische Mischung einen pH-Wert im Bereich von größer als 7,5 aufweist.

6. Verfahren nach mindestens einem der Ansprüche 1 bis 5, wobei das Verhältnis von dem mindestens einen Alkohol zu dem mindestens einen Alkoholat im Bereich von 99:1 bis 8:2 ist.

7. Verfahren nach mindestens einem der Ansprüche 1 bis 6, wobei es sich bei der Blackmass um trockene Blackmass handelt.

8. Verfahren nach mindestens einem der Ansprüche 1 bis 6, wobei die aufbereitete Blackmass und die basische Mischung miteinander nassvermahlen werden.

9. Verfahren nach mindestens einem der Ansprüche 1 bis 8, ferner umfassend den Schritt einer mechanischen Trennung von Blackmass und basischer Mischung.

10. Verwendung einer basischen Mischung umfassend mindestens einen Alkohol und mindestens ein Alkoholat zur Aufreinigung von Blackmass.

11. Verwendung nach Anspruch 10, wobei die basische Mischung mindestens ein Li-Alkoholat umfasst.
